# EUROPÄISCHE PATENTSCHRIFT

(11) **EP 3 772 788 B1**
(45) Veröffentlichungstag und Bekanntmachung des Hinweises auf die Patenterteilung: **07.02.2024**
(21) Anmeldenummer: 19190707.0
(22) Anmeldetag: 08.08.2019
(51) Int. Cl.: H02G 3/32, F16L 3/137, H02G 3/30

(54) **BEFESTIGUNGSELEMENT UND BEFESTIGUNGSSYSTEM**
FASTENING ELEMENT AND FASTENING SYSTEM
ÉLÉMENT DE FIXATION ET SYSTÈME DE FIXATION

(43) Veröffentlichungstag der Anmeldung: 10.02.2021
(73) Patentinhaber: HEBOTEC GmbH, 72116 Mössingen (DE)
(72) Erfinder: Hermann, Gerold, 72108 Rottenburg-Obernau (DE); Böhringer, Markus, 72131 Ofterdingen (DE)
(74) Vertreter: Kohler Schmid Möbus Patentanwälte

(56) Entgegenhaltungen:
- EP-A1- 2 908 039
- DE-A1- 1 910 241
- DE-C2- 3 731 149
- JP-A- 2015 201 908
- US-A- 3 632 069
- US-B1- 6 561 473

## Beschreibung

Die Erfindung geht aus von einem Befestigungselement zur lösbaren Befestigung zumindest eines länglichen Gegenstands, beispielsweise eines Kabels oder eines Rohrs, an einem Untergrund, beispielsweise einer Profilschiene, umfassend einen an dem Untergrund befestigbaren Sockel, wobei der Sockel eine gewölbte Auflagefläche für den Gegenstand aufweist und wobei der Sockel eine Fixierbandaufnahme zur Aufnahme eines Fixierbandes, insbesondere eines Klettbandes, aufweist, mit dem der Gegenstand auf der Auflagefläche lösbar befestigbar ist.

Die US 6 561 473 B1 offenbart ein Befestigungselement mit zwei "Sattelelementen".

Die US 3 632 069 A offenbart ein Befestigungselement mit einem Anschlag für einen Befestigungsring.

Der EP 2 908 039 A1 kann ein Befestigungssystem zur lösbaren Befestigung von länglichen Gegenständen an einem Untergrund mit einem Klettverschlussband entnommen werden.

Aus der DE 19 10 241 A1 ist ein Klebesockel zur Befestigung von Kabelbäumen bekannt. Es sind drei Auflageflächen vorgesehen, die alle dieselbe Wölbung aufweisen.

Die JP 2015-201908 A offenbart einen Halter zur Befestigung von Rohren.

Die DE 37 31 149 C2 offenbart eine Zugentlastung für eine in eine Öffnung eines elektrischen Geräts einführbare elektrische Anschlussschnur.

Ein Befestigungselement ist aus der DE 10 2014 101 745 A1 bekannt, wobei dem Befestigungselement mitsamt dem Fixierband das dortige Befestigungssystem zuordenbar ist. Die Lehre dieser Druckschrift wird hiermit ausdrücklich durch Verweis eingebunden.

Wünschenswert ist es, wenn ein solches Befestigungselement besonders vielseitig einsetzbar ist. Insbesondere ist es wünschenswert, wenn mit einem oder mehreren gleichartigen Befestigungselementen unterschiedliche Gegenstände, beispielsweise unterschiedliche Kabel, Steckverbinder, Rohre oder dergleichen, an unterschiedlichen Untergründen sicher befestigbar und verwendbar sind.

Diese Aufgabe wird gelöst durch ein Befestigungselement zur lösbaren Befestigung zumindest eines länglichen Gegenstands an einem Untergrund mit den Merkmalen des Patentanspruchs 1.

Insbesondere kann der längliche Gegenstand ein Kabel, ein Rohr und/oder ein Steckverbinder sein und/oder ein solches bzw. einen solchen aufweisen. Der Untergrund kann eine Profilschiene sein. Das Fixierband kann ein Klettband sein und/oder ein solches aufweisen.

Dabei liegt der Erfindung der Gedanke zugrunde, ein Befestigungselement anzubieten, das aufgrund seiner Geometrie eingerichtet ist, unterschiedlich geformte Gegenstände, insbesondere unterschiedlich große Gegenstände, besonders sicher aufzunehmen.

Die wenigstens zwei verschiedenen Auflagekreisbogenradien ermöglichen es, rundliche Gegenstände, beispielsweise Kabel oder Rohre, mit unterschiedlichen Durchmessern passgenau auf der Auflagefläche aufzulegen. Dazu kann die Auflagefläche aus wenigstens zwei unterschiedlich gekrümmten Auflageteilflächen ausgebildet sein und/oder wenigstens zwei solche Auflageteilflächen aufweisen. Insbesondere können die Auflageteilflächen jeweils als Teilmantelfläche eines Zylinders mit einem jeweils einem der wenigstens zwei verschiedenen Auflagekreisbogenradien entsprechenden Zylinderradius ausgebildet sein.

Das Befestigungselement weist einen Anschlag zur Fixierung des Gegenstands gegen ein Verschieben entlang wenigstens einer Belastungsrichtung auf. Der Anschlag kann am Sockel und/oder als Teil des Sockels ausgebildet sein. Bevorzugt kann der Anschlag an einer Stirnseite des Befestigungselements, insbesondere dessen Sockels, angeordnet und/oder ausgebildet sein.

Insbesondere ist es denkbar, zwei gleichartige Befestigungselemente nebeneinander anzuordnen. Ein Gegenstand, beispielsweise ein Steckverbinder, kann somit auf und/oder zwischen den beiden Befestigungselementen angeordnet sein bzw. werden. Durch die beiden Anschläge kann dann der Gegenstand gegen ein Verschieben entlang wenigstens einer Belastungsrichtung, je nach Anordnung der Befestigungselemente zueinander auch entlang wenigstens zweier Belastungsrichtungen, fixiert sein. Insbesondere kann der Gegenstand zwischen den beiden Anschlägen eingeklemmt sein.

Durch Variation des Abstandes der Befestigungselemente zueinander kann eine solche Anordnung besonders flexibel auf unterschiedliche, insbesondere unterschiedlich große, Gegenstände angepasst werden.

Die Belastungsrichtung bzw. die Belastungsrichtungen können parallel zur Längsrichtung des Sockels verlaufen.

Das Befestigungselement ist beispielsweise zur Befestigung von Steckern, Buchsen und/oder allgemein Steckverbindern besonders geeignet. Insbesondere kann das Befestigungselement für mehrere Größen von Steckern, Buchsen bzw. Steckverbindern ausgelegt sein. Dazu kann insbesondere die Wölbung der Auflagefläche den jeweiligen Größen bzw. den zugehörigen Radien angepasste Auflagekreisbogenradien aufweisen. Dann können die unterschiedlichen Gegenstände besonders sicher und spielfrei gehalten werden.

Die zu den Auflagekreisbögen gehörigen Auflagekreisbogenmittelpunkte können zueinander versetzt sein. Beispielsweise können sie nach außen, also von der Auflagefläche weg, versetzt sein. Dann können verschiedene Steckverbinder von klein nach groß von innen, d. h. der Auflagefläche nahe, nach außen, d. h. der Auflagefläche abgewandt, angeordnet sein, wobei jeder Steckverbinder jeder Größe spielfrei auf der Auflagefläche zumindest in einem Abschnitt der Auflagefläche aufliegen kann.

Der Anschlag weist eine Aussparung auf. Durch diese Aussparung kann ein aus einem Steckverbinder herausragendes Kabel oder dergleichen aus dem Befestigungselement herausgeführt werden.

Die Aussparung weist in einer zur Längsrichtung des Sockels senkrechten Ebene wenigstens zwei Aussparungskreisbögen mit unterschiedlichen Aussparungskreisbogenradien und/oder mit unterschiedlichen Aussparungskreisbogenmittelpunkten auf. Somit können beispielsweise aus verschiedenen Steckverbindern herausragende Kabel unterschiedlichen Durchmessers spielfrei und/oder belastungsfrei an derselben Aussparung anliegen. Insbesondere können auch mehrere solcher Kabel oder dergleichen gleichzeitig spielfrei und/oder belastungsfrei in der Aussparung angeordnet sein.

Insbesondere kann die Aussparung entsprechend der verschiedenen Größen der Gegenstände, insbesondere der Steckverbinder, mit unterschiedlichen Aussparungskreisbogenradien und vorzugsweise mit entsprechend versetzten Aussparungskreisbogenmittelpunkten ausgebildet sein. Dadurch lassen sich beispielsweise verschiedene Steckverbinder unterschiedlicher Größe am jeweiligen Anschlag und insbesondere stirnseitig festlegen, wobei gleichzeitig deren Kabel oder dergleichen frei von einer etwaigen mechanischen Beanspruchung bzw. Belastung gehalten werden können. Insbesondere können mehrere Kabel oder dergleichen zugentlastet werden.

Das Befestigungselement, insbesondere der Sockel, weist mindestens einen Durchgangskanal zur Durchführung des Fixierbandes aufweisen.

Somit kann das Fixierband einenends in und/oder an der Fixierbandaufnahme fixiert werden. Das Fixierband kann den Gegenstand umschlingen. Das Fixierband kann anderenends durch den Durchgangskanal geführt werden. Somit lässt sich die effektive Länge des Fixierbandes auf den oder die Gegenstände schnell und einfach abstimmen.

Dabei ist insbesondere denkbar, dass der Durchgangskanal wenigstens eine Einführschräge, vorzugsweise zwei Einführschrägen, aufweist. Insbesondere kann die wenigstens eine Einführschräge in einem, insbesondere spitzen, Winkel zu einer Grundfläche des Durchgangskanals verlaufen.

Die Grundfläche kann gewölbt sein. Auch die wenigstens eine Einführschräge kann gewölbt sein.

Insbesondere kann der Durchgangskanal durch mindestens drei Segmente, insbesondere durch die zwei Einführschrägen und die Grundfläche, gebildet sein. Dies ermöglicht es, das Fixierband an einer erhöhten Position in den Durchgangskanal hinein bzw. aus dem Durchgangskanal heraus zu führen. Dadurch lässt sich das Befestigungselement wesentlich einfacher verwenden. Auch lassen sich dadurch mehrere Befestigungselemente auf beispielsweise einem gemeinsamen Untergrund engerer nebeneinander anordnen.

Das Befestigungselement kann ein Befestigungsmittel, beispielsweise eine Schraube, ein Nutenstein, ein Stift oder dergleichen, und/oder eine Befestigungsausnehmung, insbesondere zur Aufnahme eines solchen Befestigungsmittels, zur Befestigung des Befestigungselements am Untergrund aufweisen. Vorzugsweise können das Befestigungsmittel und/oder die Befestigungsausnehmung außerhalb des Durchgangskanals, insbesondere in Längsrichtung gesehen vor oder hinter dem Durchgangskanal, angeordnet sein. Insbesondere können das Befestigungsmittel und/oder die Befestigungsausnehmung außerhalb der Grundfläche des Durchgangskanals angeordnet sein. Dies erleichtert ebenfalls die Durchführung des Fixierbandes durch den Durchgangskanal. Ferner kann dadurch das Befestigungselement weniger hoch bauend ausgebildet sein.

Auch ist denkbar, dass das Befestigungselement eine Ausrichthilfe zur selbsttätigen Ausrichtung und/oder Positionierung des Befestigungselements relativ zum Untergrund aufweist.

Die Ausrichthilfe kann beispielsweise als unterseitig des Befestigungselements und insbesondere als auf der der Auflagefläche gegenüberliegenden Seite abstehende Erhebung ausgebildet sein. Die Ausrichthilfe kann ausgebildet sein, formschlüssig in eine komplementär zur Ausrichthilfe gebildete Ausnehmung im Untergrund einzugreifen.

Somit lässt sich das Befestigungselement einfach und schnell mit einer vorgegebenen Orientierung und/oder Position auf dem Untergrund präzise befestigen.

Auch kann die Ausrichthilfe flexibel verformbar ausgebildet sein. Somit lässt sich das Befestigungselement besonders einfach und/oder spielfrei auf unterschiedlichen Untergründen montieren.

Dazu kann die Ausrichthilfe im Befestigungselement versenkbar ausgebildet sein. Beispielsweise kann die Ausrichthilfe eine Federzunge aufweisen, die in einer Ausnehmung im Befestigungselement versenkbar ist. Wird somit das Befestigungselement auf einem Untergrund ohne komplementär ausgebildete Ausnehmung montiert, so verschwindet die Ausrichthilfe in der Ausnehmung des Befestigungselements. Im anderen Fall, wenn der Untergrund eine entsprechende komplementär gebildete Ausnehmung aufweist, kann die Ausrichthilfe in diese Ausnehmung eingreifen und damit das Befestigungselement ausrichten und/oder positionieren.

Wird das Befestigungselement verwendet, um elektrische Leitungen, insbesondere Kabel und/oder dergleichen, zu befestigen, kann das Befestigungselement eine elektrische Isolation aufweisen. Dazu kann das Befestigungselement, insbesondere der Sockel, aus einem nichtleitfähigen Material ausgebildet sein und/oder ein solches Material aufweisen. Beispielsweise kann das Befestigungselement, insbesondere der Sockel, eine Beschichtung aus dem nichtleitfähigen Material aufweisen.

Alternativ kann das Befestigungselement, insbesondere der Sockel, aus einem leitfähigen Material, insbesondere aus einem leitfähigen Kunststoff und/oder aus einem Metall, ausgebildet sein und/oder ein solches Material aufweisen. Dazu kann das Befestigungselement, insbesondere der Sockel, eine Beschichtung aus dem leitfähigen Material aufweisen. Somit kann das Befestigungselement elektrisch leitfähig sein.

Dadurch kann der am Befestigungselement befestigte Gegenstand, insbesondere, wenn auch der Untergrund geerdet ist, geerdet sein.

Durch ein solches Befestigungselement lassen sich Anforderungen bezüglich der elektromagnetischen Verträglichkeit (EMV) einfach erfüllen.

Allgemein kann das Befestigungselement aus einem Kunststoff ausgebildet sein und/oder einen Kunststoff aufweisen. Es kann in einem Gussverfahren hergestellt sein.

Ferner kann das Befestigungselement, insbesondere die Fixierbandaufnahme, eine Verzahnung aufweisen, an der das Fixierband festlegbar ist. Beispielsweise kann vorgesehen sein, dass sich das Fixierband, insbesondere wenn es als Klettband ausgebildet ist, mit seiner Flauschseite in der Verzahnung verhaken lässt. Dann kann das Fixierband zumindest einenends besonders einfach mit dem Befestigungselement verbunden werden.

Weitere Merkmale des Befestigungselements sind der durch Verweis einbezogenen Druckschrift DE 10 2014 101 745 A1 entnehmbar.

In den Rahmen der Erfindung fällt des Weiteren ein Befestigungssystem umfassend zwei erfindungsgemäße Befestigungselemente, wobei beide Befestigungselemente jeweils wenigstens einen Anschlag aufweisen.

Durch Variation des Abstandes zwischen den beiden Befestigungselementen lassen sich mit einem solchen Befestigungssystem unterschiedliche Arten, insbesondere Größen, von Gegenständen, beispielsweise Steckverbinder, am Untergrund lösbar befestigen.

Ferner fällt in den Rahmen der Erfindung eine Verwendung eines erfindungsgemäßen Befestigungselements und/oder eines erfindungsgemäßen Befestigungssystems an und/oder in einer Schleppkette.

Schleppketten sind häufig sehr starken Beschleunigungen ausgesetzt. Versorgungsleitungen, Steuerleitungen und dergleichen, die über eine solche Schleppkette geführt werden, unterliegen daher ebenfalls starken Beschleunigungen.

Da durch die erfindungsgemäßen Befestigungselemente unterschiedliche Gegenstände besonders sicher an einem jeweiligen Befestigungselement befestigt werden können, kann gewährleistet werden, dass Gegenstände wie beispielsweise Steckverbinder trotz der hohen Beschleunigungen nicht auseinandergerissen werden oder anderweitig Schaden nehmen.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: ein Befestigungssystem in einer perspektivischen Ansicht von schräg oben;
- Fig. 2: das Befestigungssystem in einer perspektivischen Ansicht von schräg unten;
- Fig. 3: das Befestigungssystem in einer Seitenansicht;
- Fig. 4: ein Befestigungselement mit einem Fixierband in einer Ansicht auf eine Stirnseite;
- Fig. 5: das Befestigungselement mit dem Fixierband in einer perspektivischen Ansicht von schräg vorne;
- Fig. 6: das Befestigungselement mit dem Fixierband in einer perspektivischen Ansicht von schräg hinten;
- Fig. 7: das Befestigungselement ohne Fixierband in einer perspektivischen Ansicht von schräg oben und
- Fig. 8a - 8e: das Befestigungselement in Ansichten von oben, von vorne, von unten, in einer Seitenansicht sowie in einer Schnittansicht.

Im Folgenden werden zur Erleichterung des Verständnisses der Erfindung für funktional sich entsprechende Elemente jeweils gleiche Bezugszeichen verwendet.

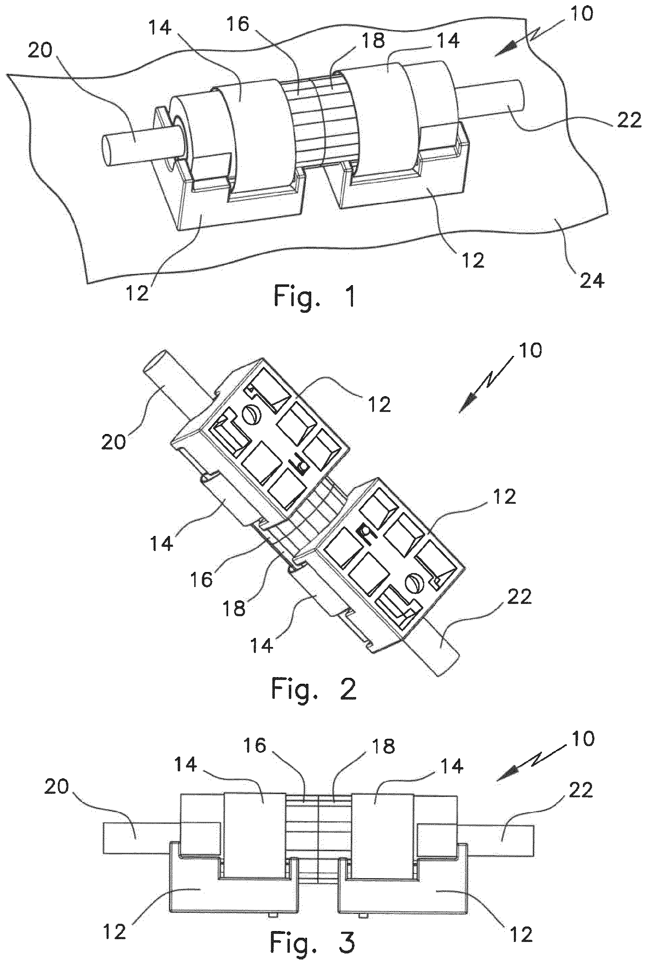

**Fig. 1, Fig. 2** und **Fig. 3** zeigen ein Befestigungssystem **10** in perspektivischen Ansichten von schräg oben und schräg unten sowie in einer Seitenansicht.

Das Befestigungssystem 10 weist zwei Befestigungselemente **12** auf, an denen jeweils mittels je einem Fixierband **14** zwei Steckverbinder **16, 18** befestigt sind.

Stirnseitig der Steckverbinder 16, 18 ragen jeweils Kabelenden **20, 22** aus den Steckverbindern 16, 18 heraus. Die Befestigungselemente 12 und damit das Befestigungssystem 10 sind auf einem Untergrund **24** (nur in Fig. 1 dargestellt) lösbar befestigt. Der Untergrund 24 kann beispielsweise eine Schalttafel, eine Profilschiene oder dergleichen sein.

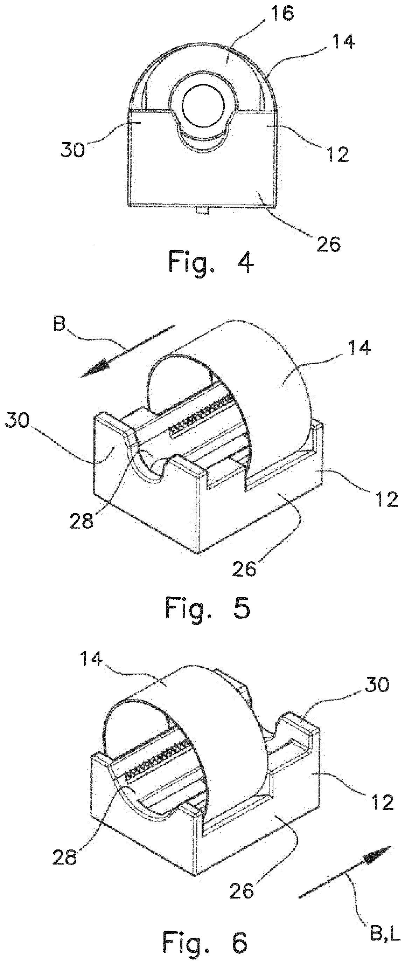

**Fig. 4, Fig. 5 und Fig. 6** zeigen ein Befestigungselement 12 in einer Ansicht auf eine Stirnseite bzw. in zwei perspektivischen Ansichten, an dem ein Fixierband 14 befestigt ist.

In Fig. 4 ist ferner der auf dem Befestigungselement 12 montierte Steckverbinder 16 mit abgebildet.

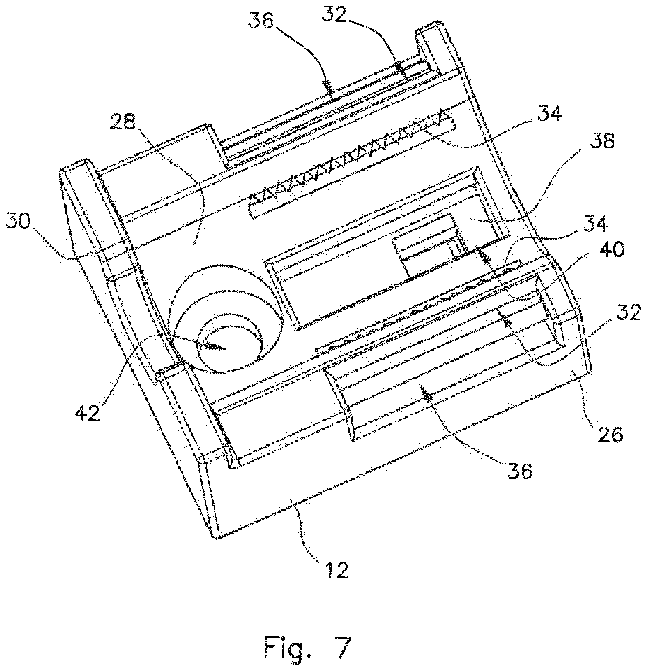

**Fig. 7** zeigt eine perspektivische Darstellung eines der beiden Befestigungselemente 12 ohne Fixierband 14.

Anhand der Fig. 4 bis Fig. 7 ist zu erkennen, dass das Befestigungselement 12 einen Sockel **26** aufweist.

Bei den hier dargestellten Ausführungsbeispielen ist das Befestigungselement 12 einteilig ausgebildet. Somit ist der Sockel 26 als Teilbereich des Befestigungselements 12 ausgebildet. Mittels des Sockels 26 ist das Befestigungselement 12 am Untergrund 24 (Fig. 1) befestigbar.

Der Sockel 26 weist auf einer Oberseite eine gewölbte Auflagefläche **28** auf. Die Auflagefläche 28 ist zur Auflage der Steckverbinder 16, 18 (Fig. 1) ausgebildet.

Stirnseitig weist das Befestigungselement 12 ferner einen Anschlag **30** auf. Durch den Anschlag 30 wird ein Verschieben des im Befestigungselement 12 aufgenommenen Steckverbinders 16 bzw. 18 entlang zumindest einer Belastungsrichtung **B** (Fig. 6), insbesondere in Richtung des Anschlags 30, verhindert.

Beispielsweise kann der Steckverbinder 16 gemäß der Darstellung der Fig. 4 aufgrund des Anschlags 30 nicht aus der Bildebene heraus in Richtung des Betrachters verschoben werden.

In diesem Ausführungsbeispiel verläuft die Belastungsrichtung B parallel zur Längsrichtung **L** (Fig. 6) des Sockels 26.

Das Fixierband 14 ist in diesem Ausführungsbeispiel als Klettband ausgebildet. Wie sich insbesondere aus Fig. 7 ergibt, ist es einenends in einer von zwei Fixierbandaufnahmen **32** im Sockel 26 und damit im Befestigungselement 12 aufgenommen und befestigt. Dazu weisen die Fixierbandaufnahmen 32 jeweils Verzahnungen **34** auf.

Das Fixierband 14 ist anderenends über zwei Einführschrägen **36** und entlang einer Grundfläche **38** durch den Sockel 26 hindurchgeführt. Vorzugsweise ist dazu die Grundfläche 38 gewölbt. Die Einführschrägen 36 bilden somit zusammen mit der Grundfläche 38 einen Durchgangskanal **40.**

Wie beispielsweise aus Fig. 4 erkennbar ist, kann somit das Fixierband 14 den Steckverbinder 16 (Fig. 4) umschlingen und am Befestigungselement 12 festlegen.

Anhand von Fig. 7 ist ferner zu erkennen, dass der Sockel 26 eine Befestigungsausnehmung **42** aufweist, die sich neben dem Durchgangskanal 40 befindet. Mittels der Befestigungsausnehmung 42 kann das Befestigungselement 12 am Untergrund 24 (Fig. 1) mithilfe einer Schraube oder dergleichen, insbesondere lösbar, befestigt werden.

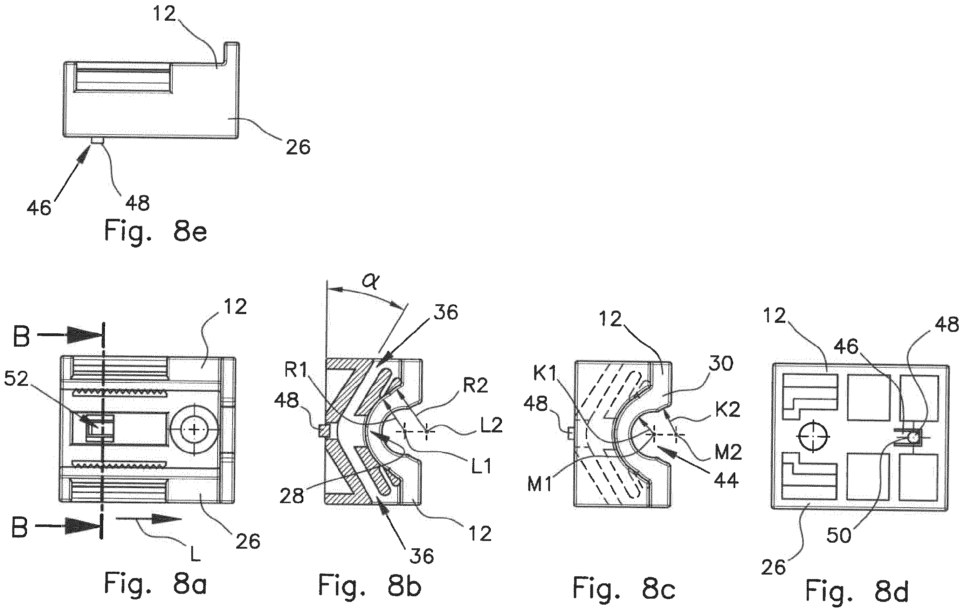

**Fig. 8a** zeigt ein Befestigungselement 12 in einer Ansicht von oben und **Fig. 8b** in einer Schnittansicht gemäß der Schnittlinie **B-B** der Fig. 8a.

Gemäß Fig. 8b verlaufen die Einführschrägen 36 in einem Winkel **alpha** schräg zur zumindest im Wesentlichen ebenen Unterseite des Sockels 26. In diesem Ausführungsbeispiel beträgt der Winkel alpha zwischen 20° und 50°, insbesondere 30°.

Die Auflagefläche 28 ist gewölbt. Dazu ist die Auflagefläche in einer der Schnittlinie B-B entsprechenden, zur Längsrichtung L senkrechten Ebene des Sockels 26 durch zwei Auflagekreisbögen mit unterschiedlichen Auflagekreisbogenradien **R1, R2** ausgebildet. Die zu den Auflagekreisbögen gehörigen Auflagekreisbogenmittelpunkte **L1, L2** sind zueinander versetzt.

Die Auflagekreisbogenradien R1, R2 und die Lage der Auflagekreisbogenmittelpunkte L1 und L2 sind dabei abgestimmt auf die auf dem Befestigungselement 12 zu befestigenden Gegenstände, insbesondere auf unterschiedliche Arten von Steckverbindern wie dem Steckverbinder 16 oder 18 (Fig. 1).

Gemäß der Stirnseitenansicht des Befestigungselements 12 gemäß **Fig. 8c** weist der Anschlag 30 eine Aussparung **44** auf. Die Aussparung 44 weist in einer zur Bildebene der Fig. 8c parallelen und somit in einer zur Längsrichtung L (Fig. 8a) des Sockels 26 senkrechten Ebene zwei Aussparungskreisbögen auf, wobei die beiden Aussparungskreisbögen unterschiedliche Aussparungskreisbogenradien **K1** und **K2** aufweisen. In diesem Ausführungsbeispiel sind auch die zugehörigen Aussparungskreisbogenmittelpunkte **M1** und **M2** zueinander versetzt. Auch die beiden Aussparungskreisbögen mit ihren unterschiedlichen Aussparungskreisbogenradien K1, K2 und ihren Aussparungskreisbogenmittelpunkten M1, M2 sind abgestimmt auf die jeweils zur Befestigung auf dem Befestigungselement 12 vorgesehenen Gegenstände.

**Fig. 8d** zeigt eine Ansicht des Befestigungselements 12 von unten und **Fig. 8e** von einer Seite. Zu erkennen ist eine Ausrichthilfe **46.** Die Ausrichthilfe 46 weist eine in (unbelastetem Zustand) vom Befestigungselement 12 bzw. vom Sockel 26 nach unten abstehende Erhebung **48** auf. Weist der Untergrund 24 (Fig. 1), an dem das Befestigungselement 12 befestigt werden soll, eine zur Erhebung 48 komplementär gebildete Ausnehmung auf, so kann die Erhebung 48 in die entsprechende Ausnehmung des Untergrundes 24 eingreifen und dadurch das Befestigungselement 12 am Untergrund 24, insbesondere selbsttätig, ausrichten und/oder relativ zum Untergrund 24, insbesondere ebenfalls selbsttätig, positionieren.

Die Erhebung 48 ist einenends an einer Federzunge **50** (Fig. 8d) der Ausrichthilfe 46 angeordnet. Die Federzunge 50 ist lediglich einenends mit dem übrigen Sockel 26 verbunden. An den anderen Seiten ist sie vom Sockel 26 freigestellt.

Innenseitig weist das Befestigungselement 12 des Weiteren eine Ausnehmung **52** (Fig. 8a) auf. Die Ausrichthilfe 46 kann somit mit ihrer Federzunge 50 durch Druck von außen, beispielsweise auf die Erhebung 48, im Befestigungselement 12 versenkt werden. Insbesondere ist es dadurch möglich, die Ausrichthilfe 46 so tief im Befestigungselement 12 zu versenken, dass die Erhebung 48 bündig mit der Unterseite des Sockels 26 abschließt.

Weist somit der Untergrund 24 keine zur Erhebung 48 komplementär gebildete Ausnehmung auf, so kann dennoch das Befestigungselement 12 bündig und spielfrei am Untergrund 24 befestigt werden, da in diesem Fall die Ausrichthilfe 46, insbesondere selbsttätig, durch elastische Verformung der Federzunge 50 im Befestigungselement 12 verschwindet.

In diesem Ausführungsbeispiel ist das Befestigungselement 12 aus einem nichtleitfähigen Material, insbesondere aus einem nichtleitfähigen Kunststoff, ausgebildet. Das Befestigungselement 12 ist mittels Spritzguss gefertigt.

Das beschriebene Befestigungssystem 10 sowie das Befestigungselement 12 lassen sich mit verschiedensten Untergründen 24 (Fig. 1) verwenden.

Insbesondere kann das Befestigungssystem 10 bzw. das Befestigungselement 12 an einer Schleppkette (in den Figuren nicht dargestellt) verwendet werden. Vorzugsweise kann das Befestigungssystem 10 bzw. das Befestigungselement 12 in mitbewegten Bereichen und/oder in Bereichen der Schleppkette, die starken Beschleunigungen unterliegen, verwendet werden.

Dazu kann die Schleppkette einen Träger aufweisen, an dem das Befestigungssystem 10 bzw. das Befestigungselement 12, insbesondere mittels seiner Befestigungsausnehmung 42 (Fig. 7) und gegebenenfalls unter Verwendung eines Befestigungsmittels wie beispielsweise einer Schraube oder einem Niet, befestigbar ist.

An dem Befestigungssystem 10 bzw. am Befestigungselement 12 kann dann ein mit der Schleppkette mitzuführender Steckverbinder oder dergleichen sicher fixiert werden.

### Bezugszeichenliste

- 10: Befestigungssystem
- 12: Befestigungselement
- 14: Fixierband
- 16: Steckverbinder
- 18: Steckverbinder
- 20: Kabelende
- 22: Kabelende
- 24: Untergrund
- 26: Sockel
- 28: Auflagefläche
- 30: Anschlag
- 32: Fixierbandaufnahme
- 34: Verzahnung
- 36: Einführschräge
- 38: Grundfläche
- 40: Durchgangskanal
- 42: Befestigungsausnehmung
- 44: Aussparung
- 46: Ausrichthilfe
- 48: Erhebung
- 50: Federzunge
- 52: Ausnehmung
- B: Belastungsrichtung
- B - B: Schnittlinie
- K1: Aussparungskreisbogenradius
- K2: Aussparungskreisbogenradius
- L: Längsrichtung
- L1: Auflagekreisbogenmittelpunkt
- L2: Auflagekreisbogenmittelpunkt
- M1: Aussparungskreisbogenmittelpunkt
- M2: Aussparungskreisbogenmittelpunkt
- R1: Auflagekreisbogenradius
- R2: Auflagekreisbogenradius
- alpha: Winkel

## Patentansprüche

1. **Befestigungselement** (12) zur lösbaren Befestigung zumindest eines länglichen Gegenstands an einem Untergrund (24), umfassend einen an dem Untergrund (24) befestigbaren Sockel (26), wobei der Sockel (26) eine gewölbte Auflagefläche (28) für den Gegenstand aufweist und wobei der Sockel (26) eine Fixierbandaufnahme (32) zur Aufnahme eines Fixierbandes (14) aufweist, mit dem der Gegenstand auf der Auflagefläche (28) lösbar befestigbar ist,
wobei die Auflagefläche (28) in einer zur Längsrichtung (L), die der Erstreckungsrichtung des länglichen Gegenstands entspricht, des Sockels (26) senkrechten Ebene wenigstens zwei Auflagekreisbögen mit unterschiedlichen Auflagekreisbogenradien (R1, R2) aufweist, wobei das Befestigungselement (12) einen Anschlag (30) zur Fixierung des Gegenstands gegen ein Verschieben entlang einer der Erstreckungsrichtung des länglichen Gegenstands entsprechenden Belastungsrichtung (B) aufweist, wobei der Anschlag eine Aussparung (44) aufweist, die in einer zur Längsrichtung (L) des Sockels (26) senkrechten Ebene wenigstens zwei Aussparungskreisbögen mit unterschiedlichen Aussparungskreisbogenradien (K1, K2) und/oder mit unterschiedlichen Aussparungskreisbogenmittelpunkten (M1, M2) aufweist, **dadurch gekennzeichnet, dass** sich die Auflagekreisbögen und die Aussparungskreisbögen voneinander unterscheiden, wobei das Befestigungselement (12), insbesondere der Sockel (26), mindestens einen Durchgangskanal (40) zur Durchführung des Fixierbandes (14) aufweist.

2. Befestigungselement nach Anspruch 1, **dadurch gekennzeichnet, dass** die zu den Auflagekreisbögen gehörigen Auflagekreisbogenmittelpunkte (L1, L2) zueinander versetzt sind.

3. Befestigungselement nach dem vorhergehenden Anspruch, **dadurch gekennzeichnet, dass** der Durchgangskanal (40) wenigstens eine Einführschräge (36), vorzugsweise zwei Einführschrägen (36), aufweist.

4. Befestigungselement nach einem der vorhergehenden Ansprüche, **dadurch gekennzeichnet, dass** das Befestigungselement (12) ein Befestigungsmittel und/oder eine Befestigungsausnehmung (42) zur Befestigung des Befestigungselements (12) am Untergrund (24) aufweist, wobei vorzugsweise das Befestigungsmittel und/oder die Befestigungsausnehmung (42) außerhalb des Durchgangskanals (40) angeordnet sind.

5. Befestigungselement nach einem der vorhergehenden Ansprüche, **dadurch gekennzeichnet, dass** das Befestigungselement (12) eine Ausrichthilfe (46) zur selbsttätigen Ausrichtung und/oder Positionierung des Befestigungselements (12) relativ zum Untergrund (24) aufweist.

6. Befestigungselement nach dem vorhergehenden Anspruch, **dadurch gekennzeichnet, dass** die Ausrichthilfe (46) im Befestigungselement (12) versenkbar ausgebildet ist.

7. Befestigungselement nach einem der vorhergehenden Ansprüche, **dadurch gekennzeichnet, dass** das Befestigungselement (12), insbesondere der Sockel (26), aus einem nichtleitfähigen Material ausgebildet ist und/oder ein solches Material aufweist.

8. Befestigungselement nach einem der vorhergehenden Ansprüche 1 bis 6, **dadurch gekennzeichnet, dass** das Befestigungselement (12), insbesondere der Sockel (26), aus einem leitfähigen Material, insbesondere aus einem leitfähigen Kunststoff und/oder aus einem Metall, ausgebildet ist und/oder ein solches Material aufweist.

9. Befestigungselement nach einem der vorhergehenden Ansprüche, **dadurch gekennzeichnet, dass** das Befestigungselement (12), insbesondere die Fixierbandaufnahme (32), eine Verzahnung (34) aufweist, an der das Fixierband (14) festlegbar ist.

10. **Befestigungssystem** (10) umfassend zwei Befestigungselemente (12) nach einem der vorhergehenden Ansprüche.

11. **Verwendung** eines Befestigungselements (12) nach einem der vorhergehenden Ansprüche 1 bis 9 und/oder eines Befestigungssystems (10) nach Anspruch 10 an und/oder in einer Schleppkette.

## Claims

1. **Fastening element** (12) for releasably fastening at least one elongate object to a substrate (24), having a base (26) which can be fastened to the substrate (24), the base (26) comprising a curved support surface (28) for the object, and the base (26) comprising a fixing belt receiving means (32) for receiving a fixing belt (14), by means of which the object can be releasably fastened to the support surface (28),
the support surface (28) comprising, in a plane perpendicular to the longitudinal direction (L) of the base (26), which corresponds to the extension direction of the elongate object, at least two support arcs having different support arc radii (R1, R2),
the fastening element (12) comprising a stop (30) for securing the object against displacement along a loading direction (B) which corresponds to the extension direction of the elongate object, the stop comprising a recess (44) which, in a plane perpendicular to the longitudinal direction (L) of the base (26), comprises at least two recess arcs having different recess arc radii (K1, K2) and/or having different recess arc center points (M1, M2), **characterized in that** the support arcs and the recess arcs differ from one another, the fastening element (12), in particular the base (26), comprising at least one through-channel (40) for guiding the fixing belt (14).

2. Fastening element according to claim 1, **characterized in that** the support arc center points (L1, L2) of the support arcs are offset relative to one another.

3. Fastening element according to the preceding claim,
**characterized in that** the through-channel (40) comprises at least one lead-in chamfer (36), preferably two lead-in chamfers (36).

4. Fastening element according to any of the preceding claims,
**characterized in that** the fastening element (12) comprises a fastening means and/or a fastening cutout (42) for fastening the fastening element (12) to the substrate (24), the fastening means and/or the fastening cutout (42) preferably being arranged outside the through-channel (40).

5. Fastening element according to any of the preceding claims,
**characterized in that** the fastening element (12) comprises an alignment aid (46) for automatically aligning and/or positioning the fastening element (12) relative to the substrate (24).

6. Fastening element according to the preceding claim,
**characterized in that** the alignment aid (46) is designed to be retractable in the fastening element (12).

7. Fastening element according to any of the preceding claims,
**characterized in that** the fastening element (12), in particular the base (26), is made of a non-conductive material and/or comprises such a material.

8. Fastening element according to any of the preceding claims 1 to 6,
**characterized in that** the fastening element (12), in particular the base (26), is made of a conductive material, in particular a conductive plastics material and/or a metal, and/or comprises such a material.

9. Fastening element according to any of the preceding claims,
**characterized in that** the fastening element (12), in particular the fixing belt receiving means (32), comprises a toothing (34) on which the fixing belt (14) can be fixed.

10. **Fastening system** (10) having two fastening elements (12) according to any of the preceding claims.

11. Use of a fastening element (12) according to any of the preceding claims 1 to 9 and/or of a fastening system (10) according to claim 10 on and/or in a drag chain.

## Revendications

1. **Élément de fixation** (12) permettant la fixation de manière amovible d'au moins un objet de forme allongée sur un support (24), comprenant un socle (26) pouvant être fixé sur le support (24), dans lequel le socle (26) présente une surface d'appui (28) bombée pour l'objet et dans lequel le socle (26) présente un logement de bande de fixation (32) permettant le logement d'une bande de fixation (14) avec laquelle l'objet peut être fixé de manière amovible sur la surface d'appui (28),
dans lequel la surface d'appui (28) présente, dans un plan perpendiculaire à la direction longitudinale (L) du socle (26), laquelle direction longitudinale correspond à la direction d'extension de l'objet de forme allongée, au moins deux arcs de cercle d'appui comportant des rayons d'arcs de cercle d'appui (R1, R2) différents,
dans lequel l'élément de fixation (12) présente une butée (30) permettant la fixation de l'objet pour empêcher un coulissement le long d'une direction de charge (B) correspondant à la direction d'extension de l'objet de forme allongée, dans lequel la butée présente un évidement (44) qui présente, dans un plan perpendiculaire à la direction longitudinale (L) du socle (26), au moins deux arcs de cercle d'évidement comportant des rayons d'arcs de cercle d'évidement (K1, K2) différents et/ou comportant des centres d'arcs de cercle d'évidement (M1, M2) différents, **caractérisé en ce que** les arcs de cercle d'appui et les arcs de cercle d'évidement se distinguent les uns des autres, dans lequel l'élément de fixation (12), en particulier le socle (26), présente au moins un canal de passage (40) permettant la traversée de la bande de fixation (14).

2. Élément de fixation selon la revendication 1, **caractérisé en ce que** les centres d'arcs de cercle d'appui (L1, L2) appartenant aux arcs de cercle d'appui sont décalés l'un par rapport à l'autre.

3. Élément de fixation selon la revendication précédente,
**caractérisé en ce que** le canal de passage (40) présente au moins un chanfrein d'insertion (36), de préférence deux chanfreins d'insertion (36).

4. Élément de fixation selon l'une des revendications précédentes,
**caractérisé en ce que** l'élément de fixation (12) présente un moyen de fixation et/ou un creux de fixation (42) permettant la fixation de l'élément de fixation (12) sur le support (24), dans lequel de préférence le moyen de fixation et/ou le creux de fixation (42) sont disposés à l'extérieur du canal de passage (40).

5. Élément de fixation selon l'une des revendications précédentes,
**caractérisé en ce que** l'élément de fixation (12) présente une aide à l'alignement (46) permettant l'alignement et/ou le positionnement automatiques de l'élément de fixation (12) par rapport au support (24).

6. Élément de fixation selon la revendication précédente,
**caractérisé en ce que** l'aide à l'alignement (46) est réalisée de manière à être escamotable dans l'élément de fixation (12).

7. Élément de fixation selon l'une des revendications précédentes,
**caractérisé en ce que** l'élément de fixation (12), en particulier le socle (26), est réalisé en un matériau non conducteur et/ou présente un tel matériau.

8. Élément de fixation selon l'une des revendications précédentes 1 à 6,
**caractérisé en ce que** l'élément de fixation (12), en particulier le socle (26), est réalisé en un matériau conducteur, en particulier en une matière plastique conductrice et/ou en un métal, et/ou présente un tel matériau.

9. Élément de fixation selon l'une des revendications précédentes,
**caractérisé en ce que** l'élément de fixation (12), en particulier le logement de bande de fixation (32), présente une denture (34) sur laquelle la bande de fixation (14) peut être maintenue.

10. **Système de fixation** (10) comprenant deux éléments de fixation (12) selon l'une des revendications précédentes.

11. **Utilisation** d'un élément de fixation (12) selon l'une des revendications précédentes 1 à 9 et/ou d'un système de fixation (10) selon la revendication 10 sur et/ou dans une chaîne de remorquage.
